# EUROPÄISCHE PATENTSCHRIFT

(11) **EP 0 547 298 B1**
(45) Veröffentlichungstag und Bekanntmachung des Hinweises auf die Patenterteilung: **14.06.1995**
(21) Anmeldenummer: 92113997.8
(22) Anmeldetag: 17.08.1992
(51) Int. Cl.: G01G 21/28

(54) **Präzisionswaage**
Precision balance
Balance de précision

(30) Priorität: 17.12.1991 CH 3733/91
(43) Veröffentlichungstag der Anmeldung: 23.06.1993
(73) Patentinhaber: Mettler-Toledo AG, 8606 Greifensee (CH)
(72) Erfinder: Lüchinger, Paul, CH-8610 Uster (CH)

(56) Entgegenhaltungen:
- EP-A- 0 234 008
- DE-U- 8 803 709

## Beschreibung

Gegenstand der vorliegenden Erfindung ist eine Präzisionswaage mit einem Waagengehäuse mit den mechanischen und der elektrischen Wägeelementen, mit einer Waagschale und einem die Waagschale umschliessenden Wägeraum sowie je auf einer Führungsbahn verschiebbaren, den Wägeraum seitlich begrenzenden Wandelementen und mit einer an der Gehäuseunterseite angeordneten Verschiebevorrichtung für die Wandelemente.

Zur Verhinderung von Messfehlern infolge Luftbewegungen im Arbeitsraum während des Wägens ist es bekannt, über der Waagschale einen Windschutz anzubringen, der zum Auflegen des Wägegutes geöffnet werden kann. Eine Präzisionswaage mit einem solchen Windschutz ist beispielsweise aus der US-A-4,700,793 (EP-A2,3-234008) bekannt. Bei dieser bekannten Präzisionswaage besteht der Windschutz aus einer feststehenden Frontscheibe, bei auf einer geraden Bahn nach hinten verschiebbaren Seitenwänden sowie einer ebenfalls nach hinten verschiebbaren Deckfläche. Die Rückwand des Wägeraumes wird durch das Waagengehäuse gebildet. Unterhalb des Gehäusebodens ist eine ebenfalls geradlinig nach hinten verschiebbare Vorrichtung gelagert, mittels welcher über entsprechende Verriegelungsorgane an den beiden Seitenwänden letztere miteinander koppelbar und gemeinsam verschiebbar sind. Durch ein weiteres Verriegelungsorgan kann zudem auch die Abdeckung zusammen mit den beiden Seitenwänden oder nur mit einer Seitenwand verschoben werden. An der Verschiebevorrichtung sind beidseitig Griffe angebracht, damit die Bedienungsperson der Waage wahlweise das Öffnen der Seitenwände mit der linken oder mit der rechten Hand vornehmen kann. Es ist daher auch möglich, mit der linken Hand auf der linken Seite der Waage die rechte Seitenwand zu öffnen oder zu schliessen.

Diese bekannte Vorrichtung eignet sich in vorzüglicher Weise für Waagen mit einem rechteckigen Waagengehäuse, dessen Seitenwände auf parallel zueinander verlaufenden Bahnen verschiebbar sind.

Um die Standfläche von Präzisionswaagen möglichst gering zu halten, sind in letzter Zeit auch Windschutzvorrichtungen bekannt geworden, deren zylindrisch gebogenen Seitenwände auf Kreisbahnen verschiebbar angeordnet sind. Für solche Waagen kann die bekannte Vorrichtung nicht eingesetzt werden.

Die Aufgabe der vorliegenden Erfindung besteht darin, eine platzsparende Verschiebevorrichtung für Seitenwände oder Seitenwandabschnitte zu schaffen, die auf gekrümmten Führungsbahnen zur Rückseite des Waagengehäuses verschiebbar sind.

Gelöst wird diese Aufgabe durch eine Präzisionswange nach dem Anspruch 1.

Die erfindungsgemässe Verschiebevorrichtung erlaubt es der Bedienungsperson, die Wandelemente des Wägeraumes einzeln oder gemeinsam zu verschwenken, wobei die Betätigung durch die Verbindung der Betätigungshebel durch ein Kupplungselement von der linken oder von der rechten Seite des Waagengehäuses aus möglich ist.

Das vorzugsweise als dünne Platte ausgebildete Kupplungselement, das auf einer linearen Führung am Gehäuse geführt ist, ermöglicht eine sehr niedrige Bauweise und die Verwendung zweier identisch ausgebildeter Betätigungshebel. Die Übertragung der Schwenkbewegung des Betätigungshebels auf das Kupplungselement erfolgt durch Nutensteine oder Rollen, die in entsprechenden Schlitzen und Bohrungen an den beiden Teilen geführt sind. Durch geeignete Wahl des Materials der Nutensteine oder eine gute Lagerung der Rollen ergibt sich eine reibungsarme Verbindung zwischen den einzelnen verbundenen Elementen. Führungsrollen am Kupplungselement erlauben zudem eine geräuscharme Verschiebung und spielfreie Führung. Mit Führungsschienen, welche in die Einstiche an den Peripherien der Führungsrollen eingreifen, kann die gesamte Vorrichtung in einfacher Weise an der Unterseite des Waagengehäuses festgehalten werden. An den Seitenwänden befestigte, vertikal verschiebbare Riegel sind leicht zugänglich und ermöglichen es der Bedienungsperson, die jeweils gewünschte Seitenwand oder Seitenwände mit der Verschiebevorrichtung zu verbinden bzw. die Verbindung wieder aufzuheben. Anstelle der in die gewünschte Stellung verschiebbaren Riegel können federbelastete Bolzen durch stets in gleicher Richtung erfolgendes Drücken eingerastet oder gelöst werden. Die gesamte Vorrichtung lässt sich dank der geringen Bauhöhe ohne Probleme auch nachträglich an der Unterseite der Waage anbringen.

Anhand eines illustrierten Ausführungsbeispieles wird die Erfindung näher erläutert. Es zeigen:
- Figur 1: eine perspektivische Darstellung einer Präzisionswaage,
- Figuren 2-4: je eine Ansicht der Waage von unten,
- Figur 5: einen Querschnitt durch den Gehäuseboden längs Linie V-V in Figur 3 und
- Figur 6: einen Querschnitt durch den Gehäuseboden längs Linie VI-VI in Figur 2.

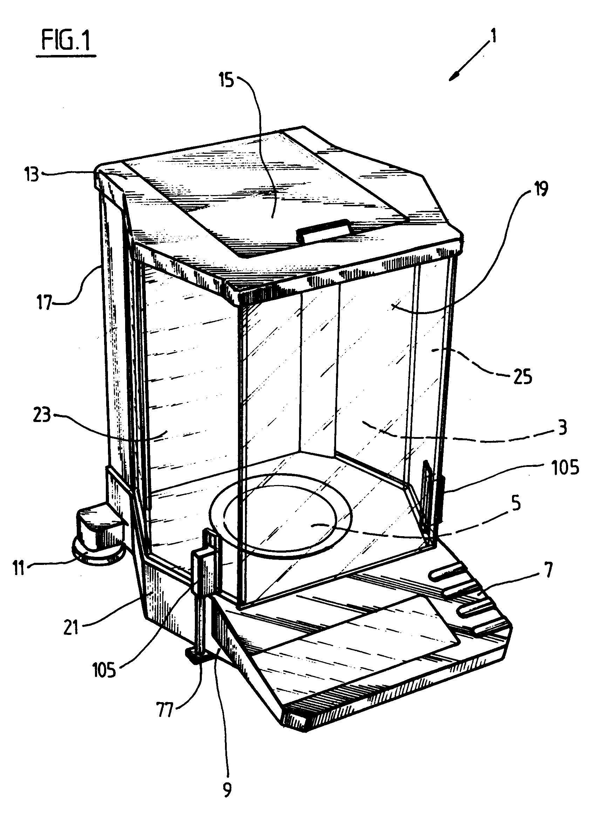

Die in Figur 1 dargestellte Waage 1 weist einen Wägeraum 3 mit im wesentlichen polygonartigem Querschnitt auf. Im Zentrum ist die Waagschale 5 angeordnet. Auf der Vorderseite der Waage 1 ist ein geneigt zur Horizontalen angebrachtes Bedienungs- und Tastaturfeld 7 sichtbar. Unterhalb des Wägeraumes 3 sind im Gehäuse 9 die elektronischen und die mechanischen Wägeelemente untergebracht. Die Waage 1 steht auf drei Füssen 11, von denen nur ein einziger sichtbar ist. Der Wägeraum 3 ist oben durch eine Abdeckung 13 verschlossen. In der Abdeckung 13 kann ein Deckel 15 vorgesehen sein, der zur Beschickung der Waage 1 von oben geöffnet und zum Wägen wieder verschlossen werden kann. Die Rückseite der Waage 1 wird durch eine Rückwand 17 gebildet, die die Abdeckung 13 trägt. Auf der Vorderseite wird der Wägeraum 3 durch eine plane Frontscheibe 19 abgeschlossen, die unten am Gehäuse 9 und oben an der Abdeckung 13 befestigt ist. Seitlich wird der Wägeraum 3 durch je eine sowohl am Gehäuseboden 21 als auch an der Unterseite der Abdeckung 13 geführte Seitenwand 23,25 abgeschlossen.

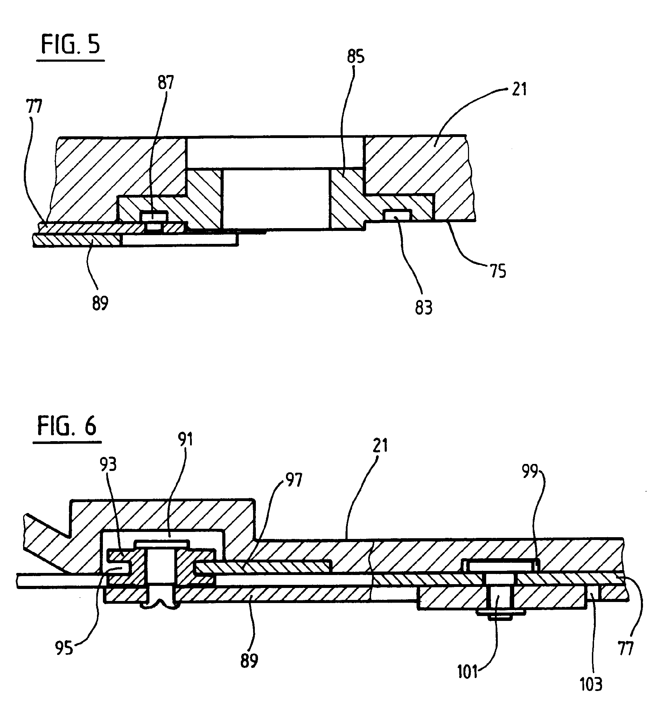

Auf der Unterseite 75 des Gehäusebodens 21 sind zwei Betätigungshebel 77 und 79 um eine gemeinsame Schwenkachse 81 schwenkbar. Die Führung der beiden Betätigungshebel 77,79 erfolgt in einer kreisringförmigen Nut 83, die direkt in der Unterseite 75 des Gehäusebodens 21 oder in einer im Gehäuseboden 21 eingesetzten Hülse 85 eingelassen ist. Als Führungsmittel sind an den beiden Betätigungshebeln 77,79 der Nut 83 entsprechende Rippen oder auch nur zwei entsprechend ausgebildete Nocken 87 angebracht, die eine im wesentlichen spielfreie Schwenkung der beiden Hebel erlauben (vgl. auch Figur 5). Unter den beiden Betätigungshebeln 77,79 liegt eine Kupplungsplatte 89, die in drei parallel verlaufenden Führungsnuten 91 an der Gehäuseunterseite 75 längs verschiebbar ist. An der Kupplungsplatte 89 sind in die Führungsnuten 91 reichende Führungsrollen 93 mit je einem peripher verlaufenden Einstich 95 drehbar befestigt (vergleiche insbesondere auch den vergrösserten Ausschnitt in der Darstellung in Figur 6). In den Einstich 95 an den Führungsrollen 93 greift eine am Gebäuseboden 21 befestigte Führungsschiene 97 ein. An der zentral liegenden Führungsnut 91 sind vorzugsweise beidseitig Führungsschienen 97 angeordnet. Durch die Führungsschienen 97 wird die Kupplungsplatte 89 an der Unterseite 75 des Gehäusebodens 21 gehalten. Sie trägt im Betrieb zugleich die über ihr liegenden beiden Betätigungshebel 77,79.

Die beiden Betätigungshebel 77,79 und die Kupplungsplatte 89 sind durch einen in einer bogenförmigen Ausnehmung 99 im Boden 21 geführten Nutenstein oder eine Rolle 101 miteinander verbunden. Der Nutenstein 101 kann in einem Schlitz 103 in der Kupplungsplatte 89 quer zur Verschieberichtung der Kupplungsplatte 89 verschoben werden, wenn einer der Hebel 77 oder 79 um die Achse 81 geschwenkt wird. Der Nutenstein 101 ist im Bereich, welcher in den Schlitz 103 zu liegen kommt, vorzugsweise rechteckförmig ausgebildet; im Bereich mit dem Eingriff in die bogenförmige Ausnehmung 99 ist seine Gestalt entsprechend kreisförmig. Die Hebel 77,79 weisen runde Sackbohrungen zur Führung der Nutensteine 101 auf.

Im folgenden wird die Funktionsweise der Verschiebevorrichtung näher erläutert. Beabsichtigt die den Wägevorgang durchführende Person, die Waage 1 mit der rechten Hand von der rechten Seite zu beschicken, so muss die rechtsliegende Seitenwand 25 nach hinten verschoben werden. Dazu ergreift sie beispielsweise mit der linken Hand den links liegenden Betätigungshebel 77 und schiebt diesen nach hinten (von oben gesehen im Uhrzeigersinn). Bei der Schwenkbewegung des Betätigungshebels 77 wird durch den mit diesem über den Schlitz 103 verbundenen Nutenstein 101 die Kupplungsplatte 89 nach hinten verschoben.

Da die Kupplungsplatte 89 auch mit dem Betätigungshebel 79 auf der gegenüberliegenden Seite über einen Nutenstein 101 verbunden ist, wird auch der gegenüberliegende Betätigungshebel 79 synchron nach hinten verschoben. Damit nun eine Öffnung der rechten Seite der Waage erfolgt, ist an der Seitenwand 25 ein vertikal verschiebbarer Riegel 105 angebracht, dessen unteres, dornförmig ausgebildetes Ende in eine Bohrung 107 im Betätigungshebel 77 eingreift (vgl. Figur 1). Eine analoge Bohrung 107 ist im Betätigungshebel 75 angebracht, und an der Seitenwand 25 ist ebenfalls ein Riegel 105 vertikal verschiebbar geführt angeordnet. Im oben beschriebenen Fall wäre der linke Riegel 105 nach oben geschoben, damit die Seitenwand 23 in der geschlossenen Stellung verharrt.

Alternativ kann der Riegel 105 auch mit dem Betätigungshebel verbunden und die Bohrung an einer Lasche an der Seitenwand vorgesehen sein. Wenn beide Riegel 105 in die Bohrungen 107 in den Betätigungshebeln 77,79 eingeschoben sind, so können die beiden Seitenwände 23,25 synchron, entweder mit dem Hebel 77 oder mit dem Hebel 79, verschoben werden. In einer nicht dargestellten Ausführungsform der Verriegelung der Seitenwände 23,25 mit den Enden der Betätigungshebel 77,79 tritt anstelle eines durch Reibung in Stellung gehaltenen Riegels 105 eine mit Federkraft beaufschlagte Vorrichtung, wie sie bei Kugelschreibern üblich ist. Nach einem erstmaligen Druck auf den Bolzen verharrt dieser unten in verriegelter Stellung; nach einem zweiten Drücken kehrt er in die angehobene Entriegelungstellung zurück.

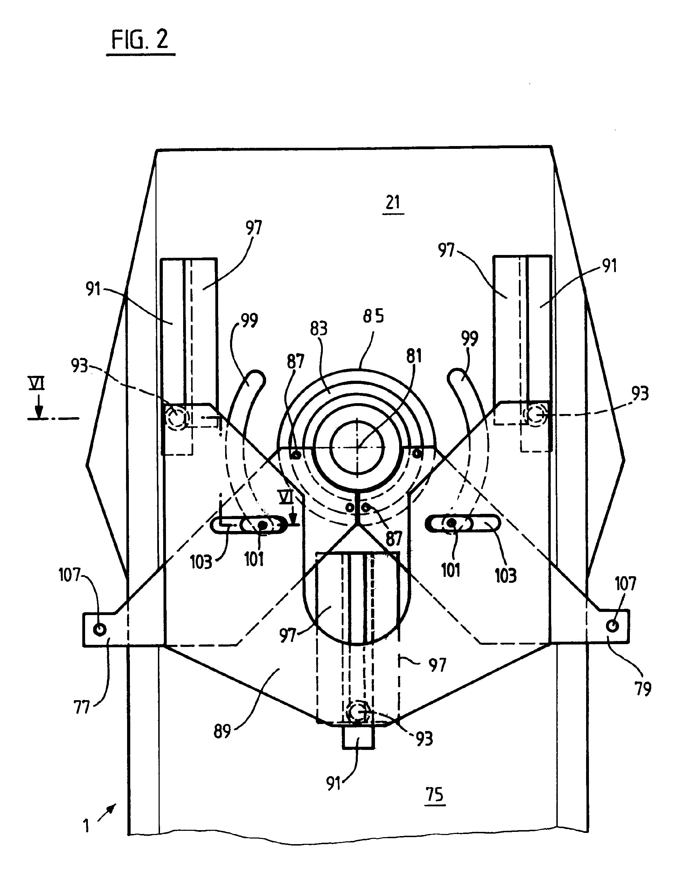

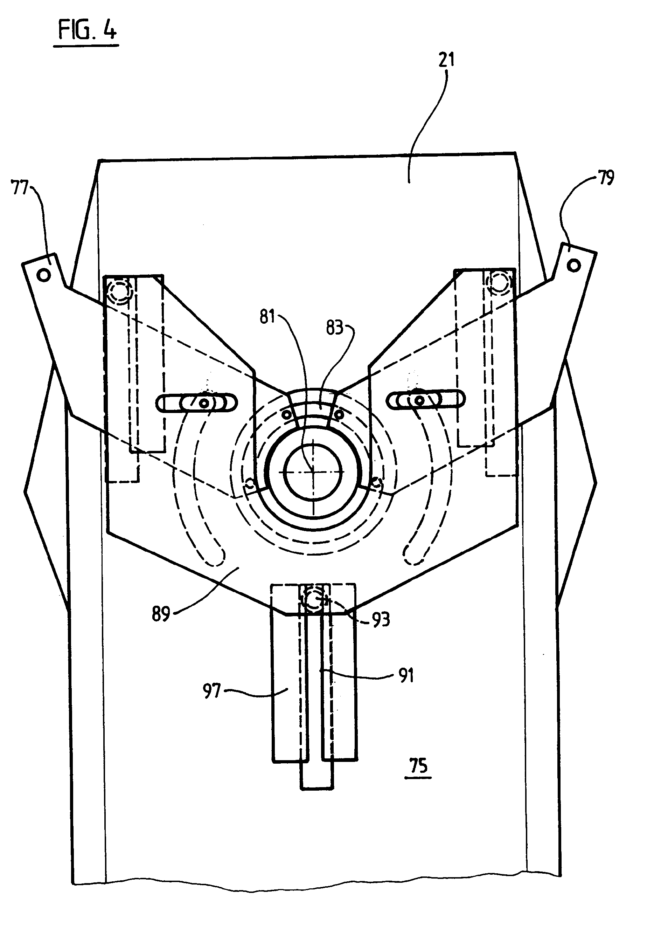

Im folgenden werden die Figuren 2 bis 4 erläutert. Figur 2 stellt die Verschiebevorrichtung dar, wie sie bei offenem Wägeraum 3 vorliegt. Die beiden Hebel 77,79 sind vollständig nach hinten geschwenkt und haben die Kupplungsplatte 89 mittels der Nutensteine 101 entlang der Führungsnuten 91 ebenfalls nach hinten geschleppt. Wenn die Riegel 105 in den Bohrungen 107 eingerastet sind, so werden bei einer Schwenkung der Betätigungshebel 77,79 beide Seitenwände 23,25 synchron geschlossen Es spielt dabei keine Rolle, welchen der beiden Hebel 77 oder 79 die Bedienungsperson schwenkt.

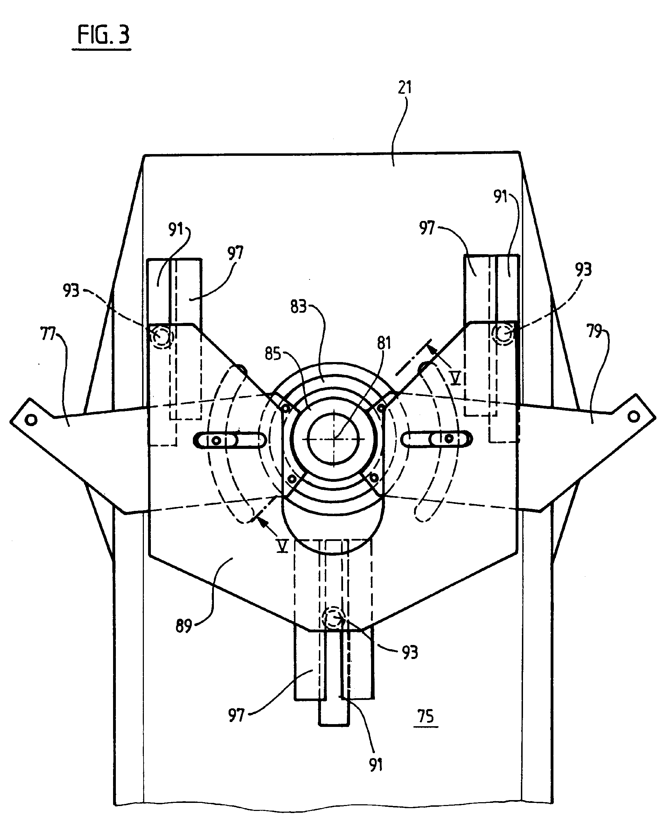

Beim Verschwenken eines der beiden Betätigungshebel 77,79 gleitet der Nutenstein 101 oder - falls eine Rolle vorgesehen ist - die Rolle 101 im Schlitz an der Kupplungsplatte 89 vorerst nach aussen (vgl. Figur 3). Gleichzeitig wälzen sich die geschlitzten Rollen 93 in den Nuten 91 an den Führungsschienen 97 ab und gewährleisten eine exakt lineare Bewegung der Kupplungsplatte 89 nach vorn. Die Schwenkbewegungen der Betätigungshebel 77,79 werden durch die Nuten 91 begrenzt, wenn nämlich die Führungsrollen 93 an den Enden der Nuten 91 anstossen.

Wenn einer der beiden Riegel 101 nicht mit dem zugehörigen Betätigungshebel 77 oder 79 verbunden ist, wird die entsprechende Seitenwand 23 oder 25 beim Schwenken des andern Hebels nicht mitgenommen.

Die wenigen Elemente der Verschiebevorrichtung lassen sich mit einfachen Mitteln an der Unterseite 75 der Waage 1 befestigen und können, falls eine Reinigung notwendig erscheint, zerlegt werden. Die Rollen 93, welche nicht mehr von der Kupplungsplatte 89 gelöst werden müssen, sind durch Stauchbördeln oder Einpressen ihrer Achsen mit der Kupplungsplatte 89 unlösbar verbunden. Die Nutensteine 101 können mit Seegerringen oder anderen bekannten lösbaren Haltemitteln gesichert sein.

Die gesamte Bauhöhe der Verschiebevorrichtung entspricht im wesentlichen der Summe der Dicke der Bleche, aus denen der Hebel 77 und die Kupplungsplatte 89 gefertigt sind.

## Patentansprüche

1. Präzisionswaage mit einem Waagengehäuse (9), mit den mechanischen und elektrischen Wägeelementen, mit einer Waagschale (5) und einem die Waagschale umschliessenden Wägeraum (3) sowie je auf einer Führungsbahn verschiebbaren, den Wägeraum seitlich begrenzenden Wandelementen (23, 25) und mit einer an der Gehäuseunterseite angeordneten Verschiebevorrichtung für die Wandelemente, wobei die Verschiebevorrichtung zwei das Gehäuse (9) jeweils seitlich überragende flache Betätigungshebel (77,79) aufweist, die am Boden (21) des Gehäuses (9) schwenkbar gelagert und über ein flaches Kupplungselement (89) miteinander verbunden sind.

2. Waage nach Anspruch 1, dadurch gekennzeichnet, dass das Kupplungselement (89) aus einer Kupplungsplatte besteht, die in einer linearen Führung (91) am Boden (21) verschiebbar ist.

3. Waage nach Anspruch 2, dadurch gekennzeichnet, dass die Führung (91) aus mindestens zwei parallel verlaufenden Nuten besteht.

4. Waage nach einem der Ansprüche 2 oder 3, dadurch gekennzeichnet, dass die Verbindung zwischen den Betätigungshebeln (77,79) und der Kupplungsplatte (89) durch Nutensteine oder Rollen (101) erfolgt, wobei in der Kupplungsplatte (89) quer zu deren Bewegungsrichtung und zu den Führungen (91) verlaufende Schlitze (103) zur Aufnahme der Nutensteine (101) angebracht sind.

5. Waage nach einem der Ansprüche 1 bis 4, dadurch gekennzeichnet, dass die Betätigungshebel (77,79) um eine gemeinsame Achse (81) schwenkbar und in einer an der Unterseite (75) im Gehäuseboden (21) oder in einer Hülse (85) angebrachten kreisringförmigen Nut (83) geführt sind.

6. Waage nach einem der Ansprüche 2 bis 5, dadurch gekennzeichnet, dass an der Kupplungsplatte (89) wenigstens drei Führungsrollen (93) befestigt sind, die in den am Gehäuseboden (21) eingelassenen, parallel zueinander liegenden, als Nuten ausgebildeten linearen Führungen (91) eingreifend abwälzen, und dass die Führungsrollen (93) durch parallel zu den Führungsnuten (91) angeordnete, die Führungsnuten (91) teilweise überdeckende Führungsschienen (97) gehalten werden.

7. Waage nach Anspruch 6, dadurch gekennzeichnet, dass in den Peripherien der Führungsrollen (93) umlaufende Einstiche (95) angebracht sind, in die die Kanten der Führungsschienen (97) eingreifen.

8. Waage nach einem der Ansprüche 4 bis 7, dadurch gekennzeichnet, dass die Nutensteine (101) in am Gehäuseboden (75) eingelassenen kreisbogenförmigen Nuten (99) geführt sind.

9. Waage nach einem der Ansprüche 2 bis 8, dadurch gekennzeichnet, dass die Kupplungsplatte (89) unterhalb der Betätigungshebel (77,79) und diese abstützend angeordnet ist.

10. Waage nach einem der Ansprüche 1 bis 8, dadurch gekennzeichnet, dass an den Seitenwänden (23,25) vertikal verschiebbare Riegel (105) befestigt sind, welche in an den Betätigungshebeln (77,79) angebrachten Bohrungen (107) ein- und ausrastbar ausgebildet sind.

## Claims

1. A precision balance with a balance housing (9) with the mechanical and electrical weighing elements, with a weighing pan (5) and a weighing space (3) which encloses the weighing pan, as well as wall elements (23, 25) which are each displaceable on a guide track and which laterally define the weighing space, and with a displacement device for the wall elements, which is arranged at the underside of the housing, wherein the displacement device has two flat actuating levers (77, 79) which project beyond the housing (9) at respective sides and which are pivotably mounted to the bottom (21) of the housing (9) and which are connected together by way of a flat coupling element (89).

2. A balance according to claim 1 characterised in that the coupling element (89) comprises a coupling plate which is displaceable in a linear guide (91) on the bottom (21).

3. A balance according to claim 2 characterised in that the guide (91) comprises at least two grooves which extend parallel.

4. A balance according to one of claims 2 and 3 characterised in that the connection between the actuating levers (77, 79) and the coupling plate (89) is made by groove sliders or rollers (101), wherein provided in the coupling plate (89) are slots (103) which extend transversely to the direction of movement of the coupling plate and the guides (91), for receiving the groove sliders (101).

5. A balance according to one of claims 1 to 4 characterised in that the actuating levers (77, 79) are pivotable about a common axis (81) and are guided in an annular groove (83) disposed at the underside (75) in the housing bottom (21) or in a bushing (85).

6. A balance according to one of claims 2 to 5 characterised in that fixed to the coupling plate (89) are at least three guide rollers (93) which are in rolling engagement in the linear guides (91) which are let in at the housing bottom (21) and which are disposed parallel to each other and which are in the form of grooves, and that the guide rollers (93) are held by guide rails (97) which are arranged parallel to the guide grooves (91) and which partially cover over the guide grooves (91).

7. A balance according to claim 6 characterised in that peripherally extending recesses (95) are provided in the peripheries of the guide rollers (93), the edges of the guide rails (97) engaging into the recesses.

8. A balance according to one of claims 4 to 7 characterised in that the groove sliders (101) are guided in arcuate grooves (99) which are let in at the housing bottom (75).

9. A balance according to one of claims 2 to 8 characterised in that the coupling plate (89) is arranged beneath the actuating levers (77, 79) and supporting same.

10. A balance according to one of claims 1 to 8 characterised in that vertically displaceable fastening lock members (105) are fixed to the side walls (23, 25) and are adapted to be engaged into and disengaged from bores (107) provided on the actuating levers (77, 79).

## Revendications

1. Balance de précision comprenant un boîtier de balance (9) renfermant les organes mécaniques et électriques de pesage, un plateau (5) et une enceinte de pesage (3) entourant le plateau ainsi que des éléments formant parois (23, 25) qui coulissent chacun sur une piste de guidage et qui délimitent latéralement l'enceinte de pesage, et comprenant un dispositif de déplacement disposé sur le dessous du boîtier et destiné aux éléments formant parois, le dispositif de déplacement comportant deux leviers d'actionnement plats (77, 79) qui dépassent chacun d'un côté du boîtier (9), qui sont montés pivotants sur le fond (21) du boîtier (9) et qui sont reliés entre eux par un élément d'accouplement plat (89).

2. Balance selon la revendication 1, caractérisée en ce que l'élément d'accouplement (89) est constitué par une plaque d'accouplement qui coulisse dans un guide linéaire (91) monté sur le fond (21).

3. Balance selon la revendication 2, caractérisée en ce que le guide (91) est constitué d'au moins deux rainures parallèles.

4. Balance selon l'une des revendications 2 et 3, caractérisée en ce que la liaison entre les leviers d'actionnement (77, 79) et la plaque d'accouplement (89) s'effectue à l'aide de coulisseaux ou de roulettes (101), des fentes (103) pour recevoir les coulisseaux (101) étant pratiquées dans la plaque d'accouplement (89) transversalement à son sens de déplacement ou aux guides (91).

5. Balance selon l'une des revendications 1 à 4, caractérisée en ce que les leviers d'actionnement (77, 79) sont guidés de manière pivotante autour d'un axe commun (81) et dans une rainure circulaire (83) ménagée sur le dessous (75) du fond du boîtier (21) ou dans une douille (85).

6. Balance selon l'une des revendications 2 à 5, caractérisée en ce que, sur la plaque d'accouplement (89), sont fixées au moins trois roulettes de guidage (93) qui roulent à l'intérieur des guides linéaires (91) ménagés dans le fond (21) du boîtier, parallèles entre eux et conçus sous forme de rainures, et en ce que les roulettes de guidage (93) sont maintenues par des glissières de guidage (97) qui sont parallèles aux rainures de guidage (91) et qui recouvrent partiellement les rainures de guidage (91).

7. Balance selon la revendication 6, caractérisée en ce qu'à la périphérie des roulettes de guidage (93) sont pratiquées des encoches périphériques (95) dans lesquelles s'engagent les bords des glissières de guidage (97).

8. Balance selon l'une des revendications 4 à 7, caractérisée en ce que les coulisseaux (101) sont guidés dans des rainures arquées (99) pratiquées dans le fond (75) du boîtier.

9. Balance selon l'une des revendications 2 à 8, caractérisée en ce que la plaque d'accouplement (89) est disposée en dessous des leviers d'actionnement (77, 79) et supporte ceux-ci.

10. Balance selon l'une des revendications 1 à 8, caractérisée en ce qu'aux parois latérales (23, 25) sont fixés des verrous (105) à déplacement vertical qui peuvent être engagés dans des perçages (107) pratiqués dans les leviers d'actionnement (77, 79) et en être dégagés.
